# EUROPEAN PATENT APPLICATION

(11) **EP 3 734 440 A1**
(43) Date of publication of application: **04.11.2020**
(21) Application number: 20168746.4
(22) Date of filing: 08.04.2020
(51) Int. Cl.: G06F 3/14, G06F 40/103, H04N 1/00, G09G 5/00

(54) **REMOTE SERVER, REMOTE CONTROL SYSTEM AND REMOTE CONTROL METHOD**

(30) Priority: 30.04.2019 CN 201910362158
(71) Applicant: United Microelectronics Corp., Hsinchu 30078 (TW)
(72) Inventor: SHIH, Lian-Hua, 600 Chiayi City (TW); YANG, Li-Hsin, 701 Tainan City (TW); CHEN, Chih-Cheng, 600 Chiayi City (TW); LIN, Ssu-Chieh, 621 Minxiong Township, Chiayi County (TW); LIN, Yu-Chi, 432 Taichung City (TW); HU, Fa-Fu, 302 Zhubei City, Hsinchu County (TW)
(74) Representative: Krauns, Christian

(57) **Abstract**

A remote server, a remote control system and a remote control method are provided. The remote server includes a connector and a processor. The connector is connected to a KVM switch. The KVM switch is connected to at least two machines. The connector receives a plurality of screen images of the machines through the KVM switch, wherein the screen images are respectively captured at the machines. The processor generates a plurality of control instructions according to the screen images, respectively. The control instructions are transmitted from the connector to the machines through the KVM switch, respectively.

## Description

### BACKGROUND OF THE INVENTION

### Field of the Invention

The invention relates in general to a server, a control system and a control method, and more particularly to a remote server, a remote control system and a remote control method.

### Description of the Related Art

With the development of technologies, various novel and innovative products are constantly launched to the market, and machines on production lines are also getting increasingly complex. A machine usually has a screen for displaying images of various control keys, messages or work-pieces. A user can carry out settings and operations required in a next stage by using the images of keys, messages or work-pieces displayed on the screen.

To facilitate the operation of work staff, a machine can be connected to a remote server by using a remote desktop technology. During a remote operation process, a display of the remote server displays an image the same as that on the screen of the machine. Work staff can directly learn the content shown on the screen of the machine without being near the machine in person.

However, the display of the remote server needs to display an image the same as that on the screen of the machine. Thus, if several machines need to be concurrently operated, several remote servers need to be corresponding provided, hence significantly depreciating the benefits of remote control and degrading the efficiency of remote control.

### SUMMARY OF THE INVENTION

The invention is directed to a remote server, a remote control system and a remote control method, in which images of multiple machines are automatically analyzed at a remote server through a KVM switch, and corresponding control instructions are generated by using artificial intelligence, so as to automatically operate multiple machines.

According to an aspect of the present invention, a remote server is provided. The remote server includes a connector and a processor. The connector is connected to a KVM switch, which is connected to at least two machines. The connector individually receives a plurality of screen images of the machines through the KVM switch, wherein the screen images are captured at the machines. The processor generates a plurality of control instructions according to the screen images, respectively. The control instructions are transmitted from the connector to the machines through the KVM switch, respectively.

According to another aspect of the present invention, a remote control system is provided. The remote control system includes at least two machines, a KVM switch and a remote server. The remote server includes a connector and a processor. The connector is connected to the KVM switch, which is connected to the machines. The connector individually receives a plurality of screen images of the machines through the KVM switch, wherein the screen images are captured at the machines. The processor generates a plurality of control instructions according to the screen images, respectively. The control instructions are transmitted from the connector to the machines through the KVM switch, respectively.

According to yet another aspect of the present invention, a remote control method is provided. The remote control method includes the following steps. At least two machines and a remote server are connected through a KVM switch. A plurality of screen images are respectively captured at the machines, and are transmitted from the machines to the remote server through the KVM switch. The remote server generates a plurality of control instructions respectively according to the screen images. The control instructions are transmitted to the machines through the KVM switch.

The above and other aspects of the invention will become better understood with regard to the following detailed description of the preferred but non-limiting embodiments. The following description is made with reference to the accompanying drawings.

### BRIEF DESCRIPTION OF THE DRAWINGS

FIG. 1 is a schematic diagram of a remote control system according to an embodiment of the disclosure;
FIG. 2 is a schematic diagram of a display and screens according to an embodiment;
FIG. 3 is a flowchart of a remote control method according to an embodiment;
FIG. 4 is a time-division multiplexing processing method according to an embodiment; and
FIG. 5 is a time-division multiplexing processing method according to another embodiment.

### DETAILED DESCRIPTION OF THE INVENTION

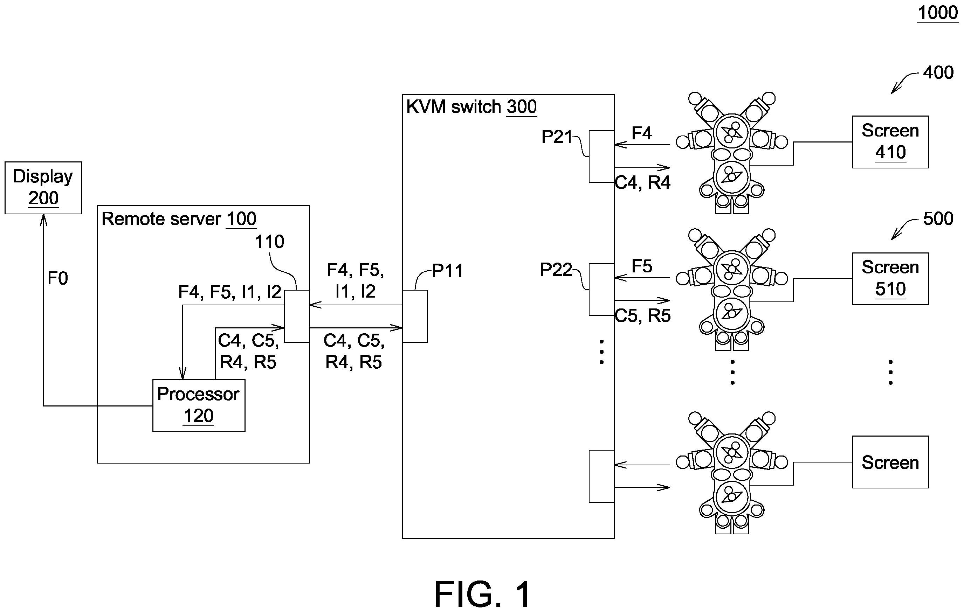

FIG. 1 shows a schematic diagram of a remote control system 1000 according to an embodiment of the disclosure. Referring to FIG. 1, the remote control system 1000 includes a remote server 100, a display 200, a keyboard-video-mouse (KVM) switch 300, and at least two machines (e.g., machines 400, 500, ...). The remote server 100 includes a connector 110 and a processor 120. The KVM switch 300 includes a first terminal connection port P11 and at least two second terminal connection ports (e.g., second terminal connection ports P21, P22, ...). The connector 110 of the remote server 100 is connected to the first terminal connection port P11 of the KVM switch 300. The machines 400, 500, ... are respectively connected to the second terminal connection ports P21, P22, .... The remote control system 1000 of the disclosure transmits images F4, F5, ... of screens 410, 510, ... of the machines 400, 500, ... to the remote server 100 through the KVM switch 300, but does not display the images F4, F5, ... on the display 200. The remote server 100 uses artificial intelligence to identify the contents of the images F4, F5, ... by using a deep learning algorithm. The remote server 100 further uses artificial intelligence to generate corresponding control instructions C4, C5, ... and outputs the corresponding control instructions C4, C5, ... to the machines 400, 500..., so as to operate the machines 400, 500, ....

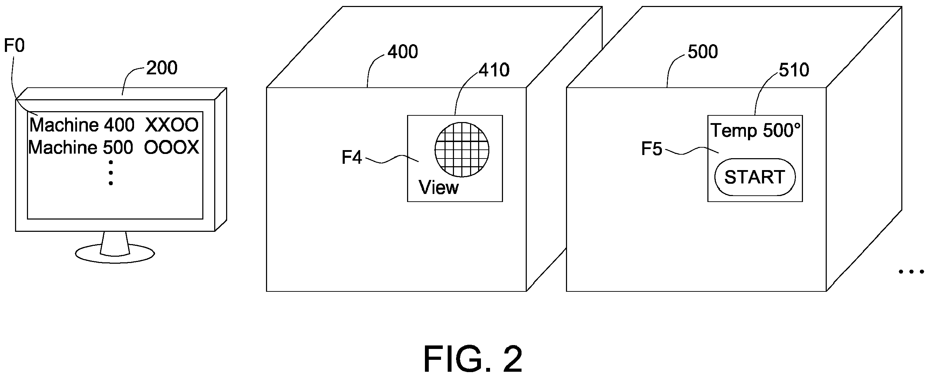

In a convention remote desktop technology, the images F4, F5, ... of the machines 400, 500, ... need to be presented on multiple displays (not shown) of multiple remote servers (not shown). FIG. 2 shows a schematic diagram of a display 200 and screens 410, 510, according to an embodiment. The remote control system 1000 is capable of using artificial intelligence at a backstage to automatically operate the multiple machines 400, 500, ... without needing to present the images F4, F5, ... of the screens 410, 510, ... on the display 200. As shown in FIG. 2, during a remote control process, the display content F0 of the display 200 is, for example, a status look-up table of all of the machines 400, 500, ... rather than the images F4, F5, of the screens 410, 420, Operation details of the above components are given with the accompanying flowchart below.

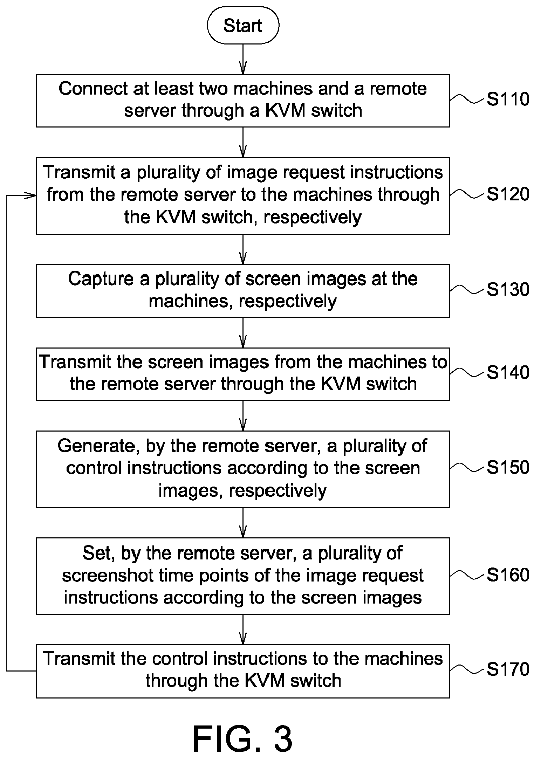

FIG. 3 shows a flowchart of a remote control method according to an embodiment. Referring to FIG. 3, in step S110, at least two machines (e.g., the machines 400, 500, ...) and the remote server 100 are connected through the KVM switch 300. The KVM switch 300 connects the machines 400, 500, ... to the remote server 100 through such as USB, HDMI, DVI-D, DVI-I and VGA wires.

In this step, rather than continuously transmitting screen desktops of the machines 400, 500, ..., only transmission paths between the remote server 100 and the machines 400, 500, ... are established.

In step S120, multiple image request instructions R4, R5, ... are respectively transmitted to the machines 400, 500, ... from the remote server 100 through the KVM switch 300. The remote server 100 can set screenshot time points of the image request instructions R4, R5, .... For example, the screenshot time points can be set as immediately capturing a screenshot upon receipt of the image request instructions R4, R5, .... Alternatively, the screenshot time point can be a predetermined time interval from a previous screenshot time point, and the remote server 100 can set the predetermined time interval according to manufacturing phases of the machines 400, 500, .... Alternatively, the screenshot time points can be a predetermined standard time (e.g., 10:25), and the remote server 100 can set the predetermined standard time according to manufacturing phases of the machines 400, 500, ....

In another embodiment, step S120 can be omitted. The machines 400, 500, ... can automatically perform screenshot at predetermined time intervals without having to wait for any image request instructions transmitted from the remote server 100.

In step S130, the screen images F4, F5, ... are respectively captured at the machines 400, 500, .... The screen images F4, F5, ... are images of the screens 410, 510, .... As described above, the machines 400, 500, ... can perform screenshot at the screenshot time points of the image request instructions R4, R5, .... Alternatively, the machines 400, 500, ... can automatically perform screenshot at predetermined time intervals without having to wait for any image request instructions transmitted from the remote server 100.

In this step, the machines 400, 500, ... can simultaneously capture the screen images F4, F5, ... without incurring any conflicts.

Further, because the machines 400, 500, ... can continuously transmit screen desktops without delay, the resolutions of the screen images F4, F5, ... can be increased without occupying an overly large transmission bandwidth.

In step S140, the screen images F4, F5, ... are transmitted from the machines 400, 500, ... to the remote server 100 through the KVM switch 300. In this step, when there are multiple screen images F4, F5, ... that need to transmitted in a same period, the screen images F4, F5, ... are transmitted to the remote server 100 by means of time-division multiplexing (TDM).

The KVM switch 300 has multiple connection port identifiers 11, 12, ..., which respectively correspond to the second terminal connection ports P21, P22, .... The remote server 100 corresponds the screen images F4, F4, ... to the machines 400, 500, ... according to the connection port identifiers 11, 12, ... without causing any confusion.

In step S150, the remote server 100 generates a plurality of control instructions C4, C5, ... according to the screen images F4, F5, ..., respectively. The control instructions C4, C5, ... are, for example, instructions for adjusting the temperature, taking out a chip, opening an air valve, pressing a particular screen key and vacuuming. The remote server 100 can identify the contents of the screen images F4, F5, ... by using a deep learning algorithm, and analyze operations of the next phase according to the contents, wherein different operations may need to be carried out for different contents.

In this step, the remote server 100 can directly analyze the screen images F4, F5, ... at the backstage, instead of also displaying the screen images F4, F5, ... on the display 200. The display 200 maintains the original display content F0 or remains in a turned off state.

In one embodiment, if multiple screen images F4, F5, ... are received at the same time, the remote server 100 can generate the control instructions C4, C5, ... by means of time-division multiplexing (TDM). In another embodiment, the processor 120 of the remote server 100 can adopt a multicore structure, so as to be able to synchronously analyze the screen images F4, F5, ... to generate the control instructions C4, C5, ....

In step S160, the processor 120 of the remote server 100 sets the screenshot time points of the image request instructions R4, R5, ... according to the screen images F4, F5, .... In this step, the remote server 100 can use a deep learning algorithm to analyze the screenshot time points that should be set for the next phase so as to accurately obtain required information.

In another embodiment, step S160 can be omitted. The machines 400, 500, ... can automatically perform screenshot at predetermined time intervals without having to set the screenshot time points.

In step S170, the control instructions C4, C5, ... are transmitted to the machines 400, 500, ... through the KVM switch 300. In this step, when there are multiple control instructions C4, C5, ... that need to be transmitted in the same period, the control instructions C4, C5, ... are transmitted to the machines 400, 500, ... by means of time-division multiplexing.

The process then returns to step S120 (or step S130) to continue to the above operations. Thus, one remote server 100 can analyze the images F4, F5, ... of the machines 400, 500, ..., and generate the corresponding control instructions C4, C5, ..., so as to automatically perform the operations of the machines 400, 500, ....

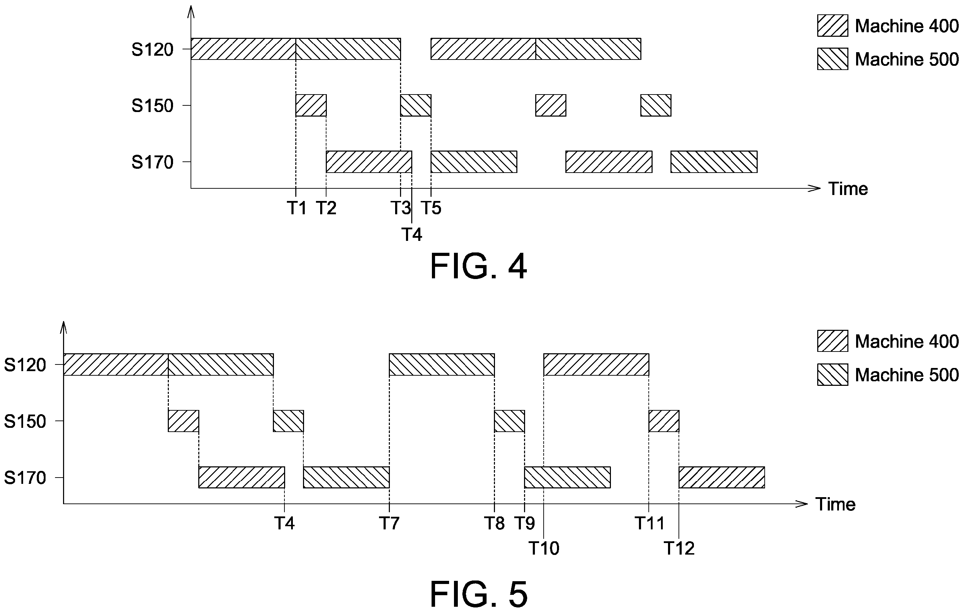

The processing method using time-division multiplexing is described in the embodiment below. FIG. 4 shows a time-division multiplexing processing method according to an embodiment. Taking the machine 400 and the machine 500 for example, step S120 for the machine 400 and the machine 500 is staggered to different time points, step S150 for the machine 400 and the machine 500 is staggered to different time points, and step S170 for the machine 400 and the machine 500 is staggered to different time points.

At a time point T1, upon completion of step S120 for the machine 400, the operation of step S150 for the machine 140 begins and the operation of step S120 for the machine 500 also begins.

At a time point T2, upon completion of step S150 for the machine 400, the operation of step S170 for the machine 400 begins.

At a time point T3, upon completion of step S120 for the machine 500, the operation of step S150 for the machine 500 begins.

At a time point T4, the operation of step S170 for the machine 400 is complete.

At a time point T5, the operation of step S170 for the machine 500 is complete.

That is to say, steps S120, S150 and S170 are performed in a time-division multiplexing manner. The execution of steps S120, S150 and S170 adopts pipelining to improve execution efficiency. For example, the operation of step S120 for the machine 500 and the operation of step S150 of the machine 400 can be performed synchronously without incurring any conflicts. The operation of step S120 of the machine 500 and the operation of step S170 for the machine 400 can be performed synchronously without incurring any conflicts.

FIG. 5 shows a time-division multiplexing processing method according to another embodiment. At the time point T4, after the operation of step S170 for the machine 400 is complete, the screenshot time point of the image request instruction R4 is set to a time point T10, and thus the operation of step S120 for the machine 400 is not immediately performed.

At a time point T7, after completion of the operation of step S170 for the machine 500, the screenshot time point of the image request instruction R5 is set as executing immediately, and thus the operation of step S120 for the machine 500 is performed immediately.

At a time point T8, after completion of the operation of step S120 for the machine 500, the operation of step S150 for the machine 500 begins.

At a time point T9, after completion of the operation of step S150 for the machine 500, the operation of step S170 for the machine 500 begins.

At a time point T10, the operation of step S120 for the machine 400 begins.

At a time point T11, after completion of the operation of step S120 for the machine 400, the operation of step S150 for the machine 400 begins.

At a time point T12, after completion of the operation of step S150 for the machine 400, the operation of step S170 for the machine 400 begins.

That is to say, the operations for the machine 400 and the machine 500 are not required to be performed according to numerical sequences, and the operation for the machine 500 can be performed before that for the machine 400.

With the above embodiments, the remote control system 1000 of the disclosure is capable of automatically analyzing the images F4, F5, ... of the machines 400, 500, ... at one remote server 100 through the KVM switch 300, and using artificial intelligence to generate the corresponding control instructions C4, C5, ..., so as to automatically perform operations on the machines 400, 500, ....

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A remote server (100), wherein the remote server (100) comprises:
a connector (110), connected to a keyboard-video-mouse, KVM, switch (300), wherein the KVM switch (300) is connected to at least two machines (400, 500), the connector (110) individually receives a plurality of screen images (F4, F5) of the machines (400, 500) through the KVM switch (300), and the screen images (F4, F5) are respectively captured at the machines (400, 500); and
a processor (120), generating a plurality of control instructions (C4, C5) according to the screen images (F4,F5), respectively, wherein the control instructions (F4, F5) are respectively transmitted from the connector (110) to the machines (400, 500) through the KVM switch (300).

2. The remote server according to claim 1, wherein a display is connected to the remote server; when the machines transmit the screen images to the remote server, the display maintains an original display content or remains in a turned off state.

3. The remote server according to claim 1 or 2, wherein the processor further transmits a plurality of image request instructions from the connector to the machines through the KVM switch, respectively, such that the machines respectively capture the screen images according to the image request instructions.

4. The remote server according to anyone of the claims 1 to 3, wherein the processor sets a screenshot time point of each of the image request instructions according to each of the screen images.

5. The remote server according to anyone of the claims 1 to 4, wherein the screen images are transmitted to the remote server by time-division multiplexing.

6. The remote server according to anyone of the claims 1 to 5, wherein the remote server corresponds to the screen images to the machines according to a plurality of connection port identifiers of the KVM switch.

7. The remote server according to anyone of the claims 1 to 6, wherein the control instructions are transmitted to the machines by time-division multiplexing.

8. A remote control method, wherein the remote control method comprises:
connecting at least two machines (400, 500) and a remote server (100) through a keyboard-video-mouse, KVM, switch (300);
capturing a plurality screen images (F4, F5) at the machines (400, 500), respectively;
transmitting the screen images (F4, F5) from the machines (40, 500) to the remove server (100) through the KVM switch (300);
generating, by the remote server (100), a plurality of control instructions (C4, C5) according to the screen images (F4, F5), respectively; and
transmitting the control instructions (C4, C5) to the machines (400,50) through the KVM switch (300).

9. The remote control method according to claim 8, wherein when the machines transmit the screen images to the remote server, a display of the remote server maintains an original display content or the display of the remote server remains in a turned off state.

10. The remote control method according to claim 8 or 9, further comprising:
transmitting a plurality of image request instructions from the connector to the machines through the KVM switch, respectively, such that the machines respectively capture the screen images according to the image request instructions.

11. The remote control method according to anyone of the claims 8 to 10, further comprising:
the remote server setting a screenshot time point of each of the image request instructions according to each of the screen images.

12. The remote control method according to anyone of the claims 8 to 11, wherein each of the screen images is a screenshot of a screen of each of the machines.

13. The remote control method according to anyone of the claims 8 to 12, wherein the screen images are transmitted to the remote server by time-division multiplexing.

14. The remote control method according to anyone of the claims 8 to 13, wherein the remote server corresponds to the screen images to the machines according to a plurality of connection port identifiers of the KVM switch.

15. The remote control method according to anyone of the claims 8 to 14, wherein the control instructions are transmitted to the machines by time-division multiplexing.
